Europäisches Patentamt

European Patent Office

Office européen des brevets

(11) Veröffentlichungsnummer : **0 122 404**
**B1**

(12) **EUROPÄISCHE PATENTSCHRIFT**

(45) Veröffentlichungstag der Patentschrift :
15.06.88

(51) Int. Cl.⁴ : **F 16 L 37/28// F17C7/02**

(21) Anmeldenummer : **84101818.7**

(22) Anmeldetag : **22.02.84**

(54) Schnellverschlusskupplung.

(30) Priorität : **13.04.83 DE 3313258**

(43) Veröffentlichungstag der Anmeldung :
**24.10.84 Patentblatt 84/43**

(45) Bekanntmachung des Hinweises auf die Patenterteilung : **15.06.88 Patentblatt 88/24**

(84) Benannte Vertragsstaaten :
**DE FR GB NL**

(56) Entgegenhaltungen :
**EP-A- 0 039 977**
**EP-A- 0 074 552**
**US-A- 3 077 330**

(73) Patentinhaber : **Carl Kurt Walther GmbH & Co. KG**
**Bahnstrasse 43-51 Postfach 11 06 42**
**D-5600 Wuppertal 11 (DE)**

(72) Erfinder : **Momberg, Wolfgang**
**Magdalenenstrasse 50**
**D-5600 Wuppertal 1 (DE)**

(74) Vertreter : **Rieder, Hans-Joachim, Dr.**
**Corneliusstrasse 45 Postfach 11 04 51**
**D-5600 Wuppertal 11 (DE)**

EP 0 122 404 B1

## Beschreibung

Die Erfindung bezieht sich auf eine durch Handhabenbetätigung auf Medienfluß schaltbare Schnellverschlußkupplung, deren Ventilverschlußorgan ausschließlich in Kupplungsstellung beider Kupplungshälften in die Öffnungsstellung verlagerbar ist und wobei die eine, einen Pistolengriff tragende Kupplungshälfte einen Hebel aufweist, der das Ventilverschlußorgan in die Öffnungsstellung zur zugehörigen Ventilsitzfläche verlagert, ferner ein zentrales, das Ventilverschlußorgan tragendes und sich in den Pistolengriff fortsetzendes Kernstück besitzt, welches relativ zu einem es aufnehmenden Außengehäuse dieser einen Kupplungshälfte anschlagbegrenzt verschieblich ist, welche Verschiebebewegung des Kernstückes erst freigegeben wird, wenn das Kernstück mit der anderen Kupplungshälfte verrastende Verriegelungsmittel mit dieser in Eingriff stehen.

Gegenstand der EP-A-0 074 552 der Anmelderin ist eine Schnellverschlußkupplung, bei welcher erst in der vollzogenen Kupplungsstellung eine das Ventilverschlußorgan freigebende Handhabenbetätigung möglich ist, welche dann den Weg freigibt für ein das Ventilverschlußorgan öffnendes Fremdmedium. Letzteres beaufschlagt einen mit dem Ventilverschlußorgan verbundenen, in Schließrichtung federbelasteten Kolben. Die Handhabe ist dort als Greiffring gestaltet.

Durch die EP-A 0 039 977 ist eine Verschlußkupplung bekannt, deren Handhabe von einem Pistolengriff gebildet ist. Die Kupplungsbetätigung erfolgt über einen auf der Oberseite des Außengehäuses, also in Grundstellung gegenläufig zum Pistolengriff ausgerichteten, schwenkbaren Hebel. Letzterer läßt sich aus einer leichten die Grundstellung bildenden Vorwärtslage bis in eine Stellung kurz unterhalb der Längsmittelachse des Außengehäuses verlagern. Die Verbindung zwischen Hebel und Kernstück erfolgt über paarige Zwischenlenker. Dabei greift ein am Hebel angelenktes Zwischenlenker-Paar am freien Schaftende des Ventilverschlußorgans an und ein zweites Zwischenlenker-Paar am Außengehäuse. Die Anlenkung des Hebels selbst ist am Kernstück vorgenommen, welches mit der anderen Kupplungshälfte in Kupplungsstellung fest verbunden ist. Eine solche Ausgestaltung ist relativ fertigungsaufwendig. Im Hinblick auf die Handhabung bedarf es einer Zweihandbedienung. Mit der einen Hand wird der Pistolengriff erfaßt, mit der anderen Hand der Hebel. Der Hebel muß über mehr als 90 Grad praktisch bis in eine koaxiale Lage zur Längsmittelachse des Pistolenkörpers geschwenkt werden. Dabei entsteht eine der Kupplungssteckrichtung praktisch entgegenwirkende Kraft. Die Arbeitsstellung der Kupplung ist abhängig von der bestimmten Winkelstellung des Hebels. Es dürfte schwerfallen, den Übergang zwischen Kupplungsphase und dem Öffnen des Verschlußorgans genügend sicher zu erkennen.

Aufgabe der Erfindung ist es, eine gattungsgemäße Schnellverschlußkupplung in herstellungstechnisch einfacher, handhabungsgünsigerer Weise gebrauchssicher auszubilden, dies bei zumutbaren Bedienungskräften und vor allem unter Erzielung einer dem Benutzer vertrauten zapfpistolenartiger Ausgestaltung, wie sie für die klassischen Flüssigtreibstoffe gang und gäbe ist.

Gelöst ist diese Aufgabe durch die im Anspruch 1 angegebene Erfindung.

Die Unteransprüche sind vorteilhafte Weiterbildungen des Erfindungsgegenstandes.

Zufolge solcher Ausgestaltung ist eine gattungsgemäße Schnellverschlußkupplung hohen Gebrauchs- und Sicherheitswerts erzielt : Der Gebrauchsvorteil liegt in der Einhandbedienung. Auch wird keine eine Trennkraft bringende Gegenbewegung zur Kupplungsrichtung eingeleitet. Der Abzugshahn liegt greifgünstig und geschützt im Winkelraum zwischen Griff und der anschließenden Unterseite des Außengehäuses und wird gegen den Griff gezogen. Ferner liegt kein störender oberseitiger Überstand mehr vor, der z. B. zu einem Verkratzen des Karosseriebleches führen könnte. Die zapfpistolenartige Ausgestaltung vermittelt vielmehr einen sicheren, gut beherrschbaren Greifhalt. Dem Benutzer wird ein ihm vertrautes Gerät an die Hand gegeben. Auch der bauliche Übergang zur Gesamtmechanik ist gut gelungen, indem die Verlagerung des Kernstückes entgegen der Kraft einer die Schließstellung des Ventilverschlußorgans im Sinne bewirkenden Druckfeder erfolgt, und das Außengehäuse eine auf ihm begrenzt verschiebliche, in Richtung der anderen Kupplungshälfte federbelastete Verriegelungshülse trägt, welche in ihrer zurückgezogenen Freigabestellung gegen Vortritt in die Verriegelungsstellung durch einen von der anderen Kupplungshälfte auslösbaren Riegel blockiert ist ; dieselbe Feder, die die Grundstellung der Kupplung herbeiführt, hält auch den Abzughahn in Grundstellung. Zwischen diesem und dem Kernstück ist ferner eine lenkerfreie und damit einfachste Zuordnung erreicht. Verachsungen als Verbindungselemente entfallen. Es genügt eine lose Anlage bzw. Abstützung des Abzughahns am Kernstück. Die Verriegelungshülse findet ihre optimale Lagerung auf dem Außengehäuse. Hierbei kann nahezu die gesamte axiale Länge des Außengehäuses genutzt werden, um zu einer großen Grifffläche für das Zurückziehen der Verriegelungshülse zu gelangen. Dabei ist es nicht erforderlich, den Pistolengriff zu umfassen, so daß für die Aufhebung der Betankungskupplung lediglich die Verriegelungshülse entgegen der sie belastenden Feder zurückgezogen wird, was übergeht in die Abzugbewegung der Schnellverschlußkupplung von der ortsfesten, anderen Kupplungshälfte. Die Verriegelungshülse ist danach in ihrer zurückgezogenen Stellung durch die erwähnte auslösbare Rast blockiert. Durch die mit einbezogenen weiteren Merkmale dahin gehend, daß das Außengehäuse ein radial auswärts abgefedertes Sperrglied trägt, welches von einer Innenstufe der Verriegelungshülse in deren zurückgezogenen Freigabestellung in Sperreingriff zum Kernstück und in vorverlagerter Stellung der Verriegelungshülse in einen Ausweichraum derselben tritt unter Austritt aus dem Kernstück, liegt eine Sicherheitsdoppelfunktion insofern vor, als in entkuppeltem Zustand weder eine Verriegelungshülsenverlagerung noch eine Bewegung des Außengehäuses des Pistolengriffes relativ zum Kernstück möglich ist. Eine baulich günstige Zuordnung des Abzughahnes wird mit einfachen Mitteln dadurch erreicht, daß dieser an rückwärtigen, in den Bereich eines Schutzbügels des Pistolengriffes weisenden Laschen des Außengehäuses lagert und sich mit einem gegabelten, gegenüber dem Bedienungsarm des Abzughahns kürzeren Bedienungsarm auf rückwärtigen Schultern des Kernstückes abstützt. Unter Be-rücksichtigung des rotationssymmetrischen Auf-baues ist die gegabelte Ausgestaltung des Betätigungsarmes besonders vorteilhaft insofern, als der Angriff der Bedienungsarmes ausgewogen beidseitig der Längsmittelachse der einen Kupplungshälfte erfolgt. Insbesondere in Bezug auf die Verriegelungsmittel erweist es sich als vorteilhaft, daß die Verriegelungshülse durch Zapfen/Schlitz-Eingriff zum Außengehäuse drehfest gehalten und außerdem in ihrer Verschiebebewegung anschlagbegrenzt ist. Schließlich besteht noch ein vorteilhaftes Merkmal darin, daß die die Ventilsitzfläche bildende, abgefederte Hülse mit einer Ringstufe in Anschlagstellung zur anderen, eingesteckten Kupplungshäfte tritt. Die Hülse wird so beim Einziehen des Kernstücks bzw. Ventilverschlußorgans zurückgehalten. Der Medienweg wird dadurch frei.

Der Gegenstand der Erfindung ist nachstehend anhand eines zeichnerisch veranschaulichten Ausführungsbeispieles näher erläutert. Es zeigt

Fig. 1 die in Form einer Zapfpistole gestaltete Schnellverschlußkupplung im Teilschnitt, und zwar in entkuppeltem Zustand,

Fig. 2 den Schnitt gemäß Linie II-II in Fig. 1,

Fig. 3 die Schnellverschlußkupplung in gekuppeltem Zustand in der Betankungsphase,

Fig. 4 eine Herausvergrößerung aus Fig. 1,

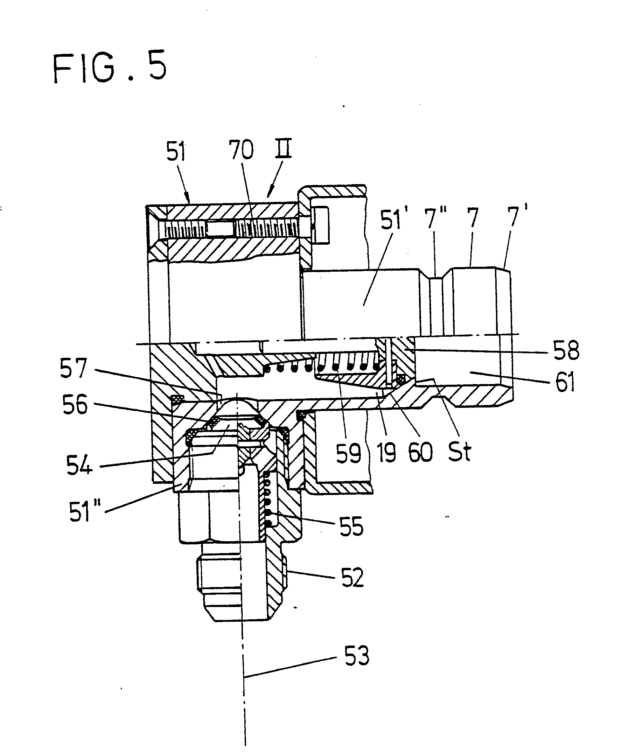

Fig. 5 die andere Kupplungshälfte im Teilschnitt, und zwar in isolierter Wiedergabe,

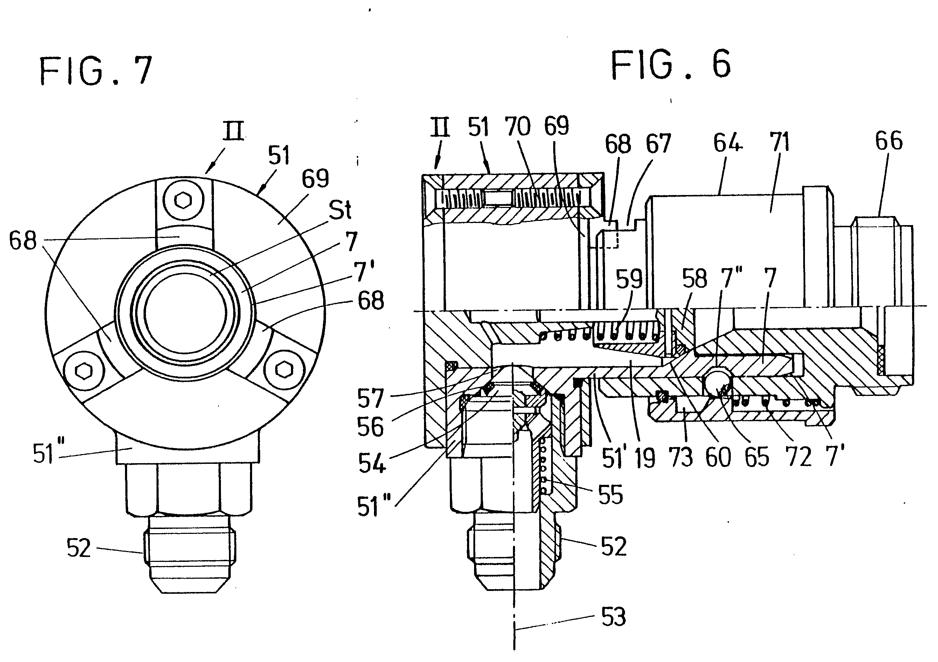

Fig. 6 dieselbe unter Zuordnung eines Adapters,

Fig. 7 die Stirnansicht der anderen Kupplungshälfte, und zwar gegen den Stecker gesehen,

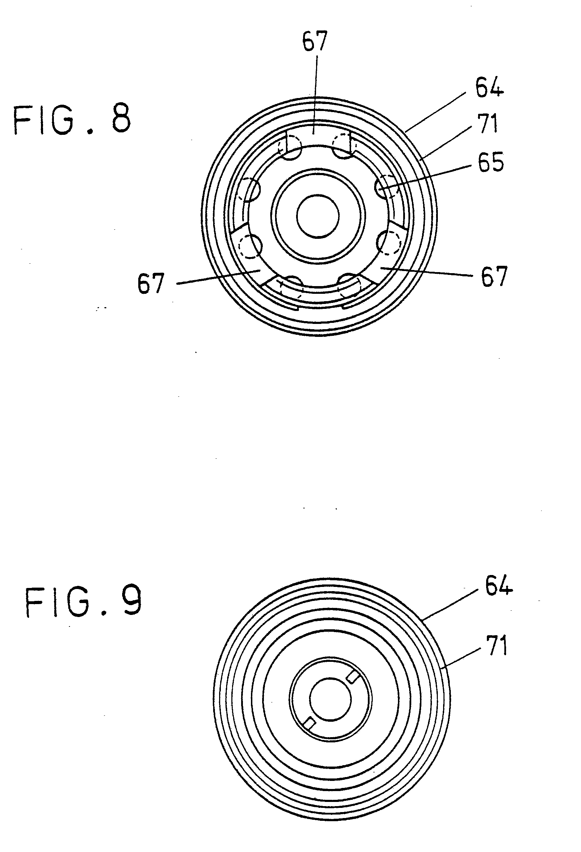

Fig. 8 den Adapter in Rückansicht und

Fig. 9 die Vorderansicht desselben.

Die eine Kupplungshälfte I der Schnellver-schlußkupplung ist in Form eines Zapfhahns gestaltet, dessen Abzughahn 2 im Bereich eines Schutzbügels 3 des Pistolengriffs 4 untergebracht ist. Schutzbügel 3 und Pistolengriff 4 sind einstückig gestaltet. Das nach unten weisende Griffende besitzt einen Anschlußstutzen 5 für eine nicht näher dargestellte, mediumführende Leitung. Das Medium ist Autogas und gelangt über einen den Pistolengriff 4 durchsetzenden Kanal 5', der sich bis in ein im stumpfen Winkel anschließendes, endseitig im wesentlichen zylindrisch gestaltetes Kernstück 6 fortsetzt.

Die andere Kupplungshälfte der Schnellverschlußkupplung ist mit II bezeichnet. Sie besitzt einen im wesentlichen zylindrischen Stecker 7. Der Stecker 7 wirkt mit einem entsprechenden Steckschacht 8 der einen Kupplungshälfte I zusammen. Die äußere Schachtwandung wird vom einwärts abgesetzten Abschnitt 9' eines relativ zum Kernstück 6 verlagerbaren Außengehäuses 9 gebildet. Die Innenwand des Steckschachtes 8 ist dagegen von einer abgefederten Hülse 10 begrenzt. Letztere bildet an ihrem steckerseitigen Stirnende eine konisch eingezogene Ventilsitzfläche 11, und tritt mit ihrer nach außen weisenden Stirnfläche in Anschlag gegen eine Ringstufe 54 der anderen Kupplungshälfte II. Mit dieser wirkt die Gegenfläche 12 eines Ventilverschlußorgans 13 der einen Kupplungshälfte I zusammen. Eine der Flächen, im vorliegenden Falle die Gegenfläche 12, trägt einen Dichtungsring 13'.

Das Ventilverschlußorgan 13 geht kernstückseitig in einen Ventilschaft 14 über. Letzterer ist mit der Querwand 15 einer Zwischenhülse 16 verbunden. Letztere ist mit dem Kernstück 6 unter Zwischenlage einer Dichtung verschraubt. Die Querwand 15 weist mehrere Durchbrechungen 17 auf und stellt die Strömungsverbindung zwischen dem im Anschlußbereich an die Zwischenhülse 16 querschnittsverbreiterten Abschnitt 5" des mediumführenden Kanals 5 und einem Ringraum 18 dar. Der Ventilschaft 14 ist dazu in seinem Durchmesser so bemessen, daß zwischen seiner Mantelfläche und der Innenwandung der die Ventilsitzfläche 11 bildenden Hülse 10 ein genügend großer Ringraum 18 verbleibt, der bei geöffnetem Ventil an den Mediumkanal 19 der anderen Kupplungshälfte II anschließt. Der so geschaffene Durchflußweg ist in strichpunktierter Linienart wiedergegeben und durch das Bezugszeichen 20 kenntlich gemacht.

Die in das Kernstück 6 eingeschraubte Zwischenhülse 16 besitzt einen äußeren Ringbund 21. Letzterer tritt, die Einschraubbewegung begrenzend, gegen die steckerseitig weisende Stirnfläche des Kernstücks 6. Die der Stirnfläche abgewandte Seite des Ringbundes 21 bildet das Widerlager für die die Hülse 10 im Sinne einer Sperrung des Verschlußventils der einen Kupplungshälfte I belastenden Schraubengangdruckfeder 22. Das andere Ende dieser Schraubengangdruckfeder 22 belastet die Schulter 23 einer mit der Hülse 10 zusammenwirkenden Außenhülse 24. Die Schulter 23 ist durch Wandungsversatz des steckerseitigen Endbereichs der Außenhülse 24 erzielt, an deren einwärts gerichtetem Ringbund 25 sich die Hülse 10 mit einem ihre Mantelfläche überragenden, also auswärts gerichteten Ringbund 26 abstützt.

Auf diese Weise ist auch eine Federkammer geschaffen. Die steckerseitige Stirnfläche der Außenhülse 24 schließt ebenengleich mit der steckerseitigen Flanke des Ringbundes 26 ab. Die diesbezüglichen Flächen begrenzen den Steckschacht 8 in Einsteckrichtung. Der Ringbund 26 erstreckt sich im Mittelabschnitt der Hülse 10, deren steckerseitiges Ende dichtend in die Zwischenhülse 16 hineinragt.

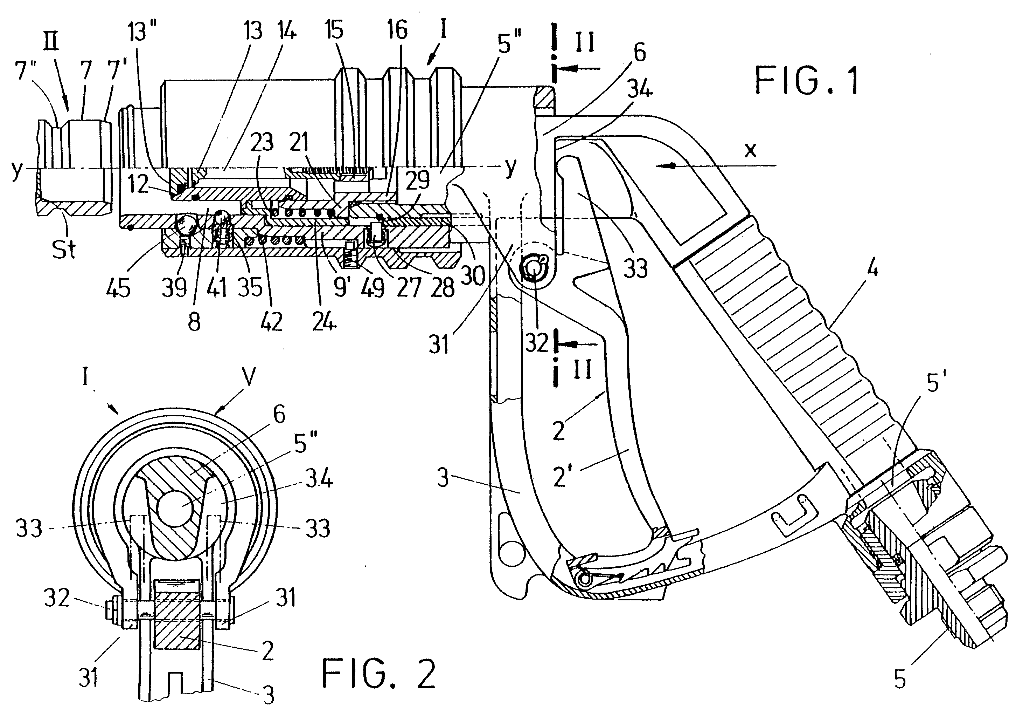

In entkuppeltem Zustand befinden sich Außengehäuse 9 und Kernstück 6 in Blockierungsstellung, d. h. das Kernstück 6 kann aus der in Fig. 1 dargestellten Lage nicht im Sinne einer Öffnungsstellung des Ventilverschlußorgans 13 verlagert werden. Hierzu trägt das Außengehäuse 9 ein radial auswärts abgefedertes Sperrglied 27. Die es belastende Feder ist mit 27' bezeichnet. Das Sperrglied 27 wird von einer Innenstufe 28 einer das Außengehäuse 9 umgebenden Verriegelungshülse V in die Sperrlage eingedrückt. Das innere Ende des Sperrglieds 27 befindet sich vor einer kernstückseitigen Sperrfläche 29. Es kann sich hier um einen auf den zylindrischen Endbereich des Kernstücks 6 aufgesetzten und daran gehalterten Ring 30 oder eine Hülse handeln. Der an abwärts gerichteten Laschen 31 des Außengehäuses 9 um einen horizontalen Zapfen 32 gelagerte Abzugshahn 2 ist, wie aus Fig. 1 ersichtlich, nicht in der Lage, über dessen nach oben weisenden Betätigungsarm 33, welcher an einer vertikalen Schulter 34 des Kernstücks 6 anliegt, das Kernstück 6 in Richtung des Pfeils x, also im Sinne einer Öffnungsstellung des Ventilverschlußorgans 13 zu bewegen.

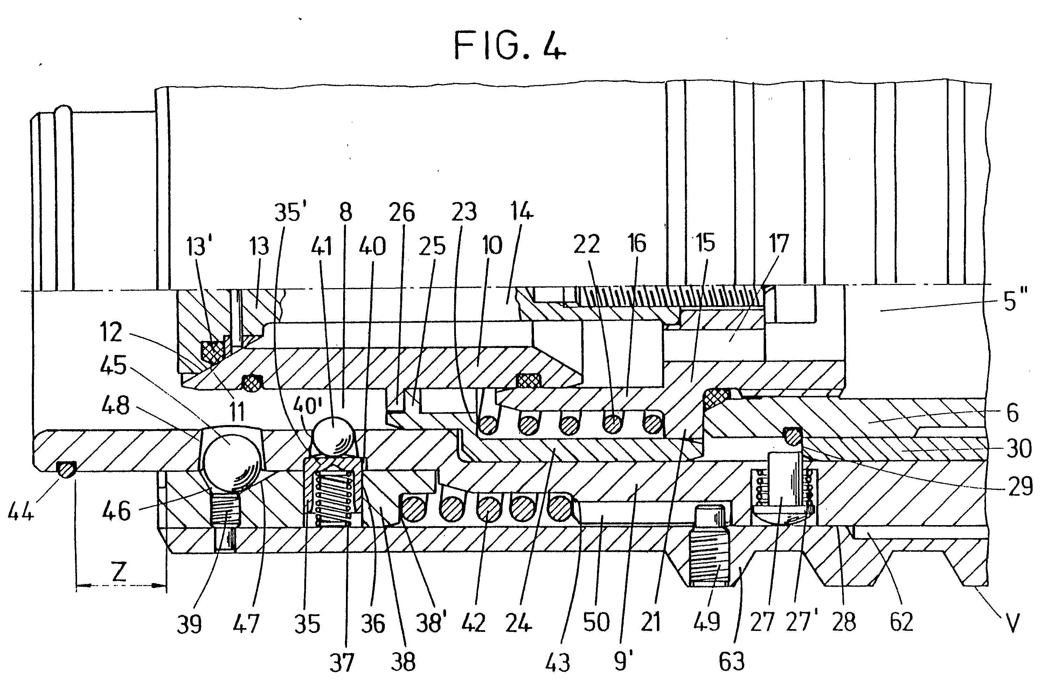

Die entsprechende Verlagerung setzt vielmehr die Verlagerung der Verriegelungshülse V in dieser Richtung voraus, was ausschließlich in Kupplungsstellung der beiden Kupplungshälften I und II möglich ist. Die auf dem Außengehäuse 9 begrenzt verschieblich gelagerte Verriegelungshülse V ist in ihrer zurückgezogenen Freigabestellung gegen Vortritt in die Verriegelungsstellung durch eine von der anderen Kupplungshälfte II auslösbare Rast blockiert. Letztere ist in Form eines Riegels 35 realisiert. Dieser sitzt in einer senkrecht zur Längsmittelachse y-y der Verriegelungshülse ausgerichteten Führungsbohrung 36, ist topfförmig gestaltet und in Eingriffsrichtung durch eine Schraubengangdruckfeder 37 belastet, die sich im Topfraum befindet. Die Riegelführung ist in einem hülsenförmigen Einsatz 38 der Verriegelungshülse V verwirklicht. Eine den Einsatz 38 und zugleich die Ringwand der Verriegelungshülse V durchsetzender Haltestift in Form einer abgesetzten Madenschraube 39 sichert die beiden Teile aneinander. In Verriegelungsstellung (Fig. 1 und 4) ragt der Kopf 35' des Riegels 35 sperrend in eine Aussparung 40 des Abschnitts 9' des Außengehäuses 9. Dem Riegelkopf 35' vorgelagert befindet sich eine Steuerkugel 41.

Die Aussparung 40 verjüngt sich in Richtung des Steckschachtes 8 in eine konische Bohrung 40', so daß die Steuerkugel 41 nicht aus der Aussparung 40 heraustreten kann. Andererseits sind aber Steuerkugeldurchmesser und Länge des Riegels 35 so abgestimmt, daß der Stecker 7 mit seiner einsteckseitigen, außen abgeschrägten Steuerfläche 7' den Riegel 35 über den genau bemessenen Kugelüberstand aus der Aussparung 40 herausdrücken kann. Dies hat zur Folge, daß eine die Verriegelungshülse V entgegen Offenstellung belastende Schraubengangdruckfeder 42 die Verriegelungshülse schlagartig in Richtung des Pfeiles x vorschiebt. Die Schraubengangdruckfeder 42 stützt sich an der gehäuseeinwärts liegenden, abgesetzten Stirnwand 38' des Einsatzes 38 ab. Die andere endständige Federwindung belastet eine Ringschulter 43 des Außengehäuses 9. In der vorgeschobenen Stellung stützt sich die Verriegelungshülse V mittels ihrer etwas ausgedrehten Stirnfläche an einem im äußersten Endbereich des Abschnitts 9' des Außengehäuses 9 aufgesetzten Sprengring 44 ab.

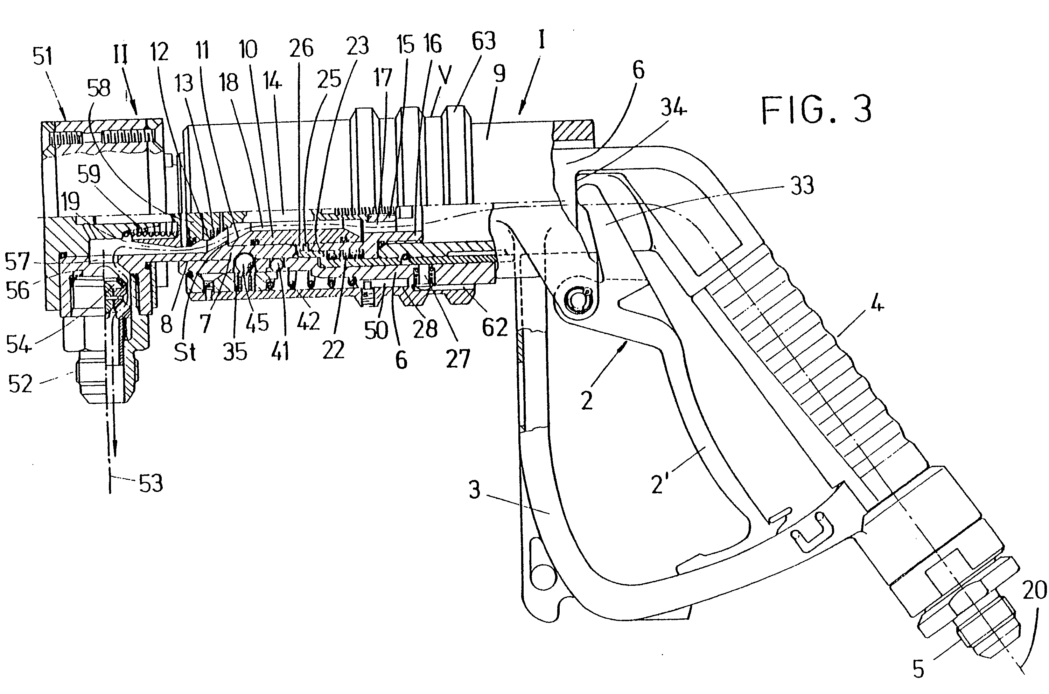

Die Aussparung 40 liegt, in Einsteckrichtung der anderen Kupplungshälfte II gesehen, axial versetzt hinter Sperrkugeln 45 (Fig. 1 und 4). Letztere befinden sich in der Entkupplungsstellung in Ausweichlage, d. h. sie treten in eine mit einer Steuerschräge versehene Ringnut 46 der Verriegelungshülse V bzw. des Einsatzes 38 ein. In der vorgetretenen Stellung der Verriegelungshülse V hebt die Steuerschräge 47 die Sperrkugeln 45 so weit an, daß sie sperrend in eine entsprechend tief geschnittene Ringnut 7" des Steckers 7 eingreifen (vergl. Fig. 3). Die Verriegelungskugeln 45 stützen sich nun an der Innenfläche des Verriegelungshülsen-Einsatzes 38 ab; die dargestellte Abstützung auf der Kopffläche des Riegels 35 ergibt sich durch Schnittebenenversatz. Die Kopffläche nimmt eine ebenengleiche Lage zur Fuge zwischen der Mantelwand des Außengehäuses 9 und der Innenwand des die Sperrkugeln 45 unterlaufenden Einsatzes 38.

Auch die Sperrkugeln 45 lagern je in einer sich nach innen hin konisch verjüngenden Radialbohrung 48 des mit dem Abschnitt 9' einen Kugelkäfig bildenden Außengehäuses 9. Das reduzierte Bohrungsende liegt maßlich unter dem Durchmesser der Sperrkugeln 45.

Um sicherzustellen, daß der Riegel 35 trotz Axialverlagerung der Verriegelungshülse V und trotz des rotationssymmetrischen Aufbaues der Kupplungshälfte I in seiner rastgerechten Axialausrichtung verbleibt, ist die Verriegelungshülse V durch Zapfen/Schlitzeingriff zum Außengehäuse 9 drehfest gehalten. Der entsprechende Zapfen 49 ist in einer querschnittsverdickten Partie des Verriegelungsgehäuses angeordnet. Er ragt mit seinem gewindefreien, die Innenwandung der Verriegelungshülse überragenden Abschnitt in einen längsorientierten Schlitz 50 des Außengehäuses 9. Die Schlitzbreite entspricht im wesentlichen der des Zapfenkopfes. Die Schlitzlänge berücksichtigt das Maß z des axialen Verriegelungshubs der Verriegelungshülse V.

Die andere, bspw. mit dem Tank eines Kraftfahrzeuges verbundene Kupplungshälfte II besitzt ein Gehäuse 51 mit rechtwinklig orientierten Gehäuseabschnitten 51' und 51". Der Gehäuseabschnitt 51' bildet den oben erläuterten, mit der einen Kupplungshälfte I zu verbindenden Stecker 7 aus. Letzterer liegt quergerichtet zu einem Gehäuseabschnitt 51" anschließenden Anschlußstutzen 52 für eine in strichpunktierter Linienart schematisch dargestellte Tankleitung 53. Vor dieser Tankleitung 53 befindet sich ein unter Durchflußwirkung des Mediums sich selbst öffnendes Absperrventil 54, welches von einer Schraubengangdruckfeder 55 belastet ist und gegen die konische Ventilsitzfläche 56 tritt. Die dortige Mediendurchflußöffnung ist mit 57 bezeichnet. Quer davor liegt der Mediumkanal 19, welcher mit der Steckerbohrung in Verbindung steht, jedoch durch ein Ventil 58 normalerweise verschlossen gehalten wird. Letzteres steht ebenfalls unter Federwirkung. Es handelt sich auch hier um eine Schraubengangdruckfeder 59. Die konisch zulaufende Ventilsitzfläche ist mit 60 bezeichnet. Sie geht in die Mediendurchflußöffnung 61 über. Letztere weist eine Breite auf derart, daß das über den Betätigungsarm 33 des Abzughahns 2 in Richtung des Pfeiles x verlagerte Ventilverschlußorgan 13 mit seiner Stirnfläche 13" das Ventil 58 entgegen Federbelastung zurückschiebt und so den Medienweg freigibt. Das quer dazu sitzende zweite Ventil 54 wird durch den Mediendruck geöffnet.

Die Funktion ist kurz zusammengefaßt wie folgt : Unter Erfassen des Pistolengriffs 4 wird die eine Kupplungshälfte I mit ihrem Steckschacht 8 axial auf den Stecker 7 der anderen Kupplungshälfte II ausgerichtet und die Kupplungsstellung herbeigeführt. Vor Erreichen der Kupplungsstellung ist der Abzughahn 2 nicht verlagerbar. Die entsprechende Relativbewegung zwischen Kernstück 6 und Außengehäuse 9 wird durch das Sperrglied 27 verhindert. Auch ein Verlagern der Verriegelungshülse ist in diesem Stadium nicht möglich. Sie ist über den Riegel 35 am Außengehäuse unverschieblich gefesselt.

Unter Ineinanderstecken der Kupplungshälften überfährt der Stecker 7 ungehindert die ausgerückten Sperrkugeln 45 und drückt mit seiner Steuerfläche 7' die Steuerkugel 41 nach auswärts. Dabei wird der Riegel 35 entgegen der Kraft der ihn belastenden Schraubengangdruckfeder 27' aus der sperrend wirkenden Aussparung 40 gedrängt. Die Verriegelungshülse V schnellt nun federbelastet in Richtung (x) der anderen Kupplungshälfte II vor, wobei die Steuerschräge 47 der Ringnut 46 die Sperrkugeln 45 in ihre Verriegelungsstellung drückt. Die Kupplung ist vollzogen. Nun liegt die Öffnungsbereitschaftsstellung vor, da durch das Vorschnellen der Verriegelungshülse die Innenstufe 28 aus dem Bereich des Sperrglieds 27 gefahren ist. Das unter Belastung der Schraubengangdruckfeder 27' stehende Sperrglied 27 verliert so seinen Stützhalt und fährt mit seinem pilzkopfförmig verdickten äußeren Ende in einen Ausweichraum 62 im bügelnahen Bereich der Verriegelungshülse. Es handelt sich um einen axialen Längsschlitz von einer Tiefe, die der Ausweichbewegung des Sperrgliedes 27 entspricht ; letzteres liegt mit seiner ebenen Stirnfläche dann vor der Außenwand des Ringes 30. Die kalottenförmige Gestalt des verdickten Kopfendes begünstigt das Zurückführen der Verriegelungshülse V, d. h. das Rücksteuern des Sperrgliedes 27 in seine Sperrstellung gemäß Fig. 4.

Durch Zug am nach unten gerichteten Bedienungsarm 2', welcher eine größere Länge aufweist als die des Betätigungsarmes 33, wird über letzteren nun das Kernstück 6 in Richtung des Pfeiles x vorverlagert. Es hebt mit seinem Ventilverschlußorgan 13 das Ventil 58 der anderen Kupplungshälfte von dessen Ventilsitzfläche 60 ab. Die Hülse 10 wird durch die Ringstufe St zurückgehalten. Das Medium kann strömen. Unter Loslassen des Abzughahns 2 drückt die Schraubengangdruckfeder 22 das Kernstück 6 unter Verlagerung entgegen der Richtung des Pfeiles x wieder in seine der Schließstellung entsprechende Grundstellung. Der Abzughahn 2 nimmt wieder die aus Fig. 1 ersichtliche Grundstellung ein.

Das Entkuppeln geschieht einfach unter Erfassen der Verriegelungshülse V, welche entgegen der Kraft der Schraubengangdruckfeder 42 auf dem Außengehäuse 9 entgegen der Richtung des Pfeiles x verschoben wird. Zur Erhöhung der Griffigkeit weist die Verriegelungshülse auf dem pistolengriffseitigen Endbereich mehrere Ringrippen 63 auf. Es tritt die aus Fig. 1 ersichtliche Freigabe-Grundstellung der Kupplungshälfte I wieder auf, d. h. Rücktritt der Sperrkugeln 45, Vortritt des Riegels 35, Einsteuern des Sperrgliedes 27.

Um die andere Kupplungshälfte auch für die herkömmliche Betankungsart über die aufschraubbare Kupplungshälfte nutzen zu können, ist ein Adapter 64 verwendet. Es handelt sich um ein Zwischenkupplungsstück, welches unter Verwendung aussteuerbarer Sperrkugeln 65 mit dem Stecker 7 verbunden wird. Zur Erzielung einer Undrehbarkeit des Adapters 64, der am freien Ende einen Schraubstutzen 66 für die nicht näher dargestellte andere Hälfte der Schraubkupplung besitzt, weist dieser auf der anderen Seite winkelgleich angeordnete, radial ausgerichtete Eingriffsschlitze 67 zum formschlüssigen Eintritt von ortsfesten Vorsprüngen 68 der anderen Kupplungshälfte II auf. Die Vorsprünge 68 sind der Gehäusewand 69 der anderen Kupplungshälfte angeformt. Die die Gehäusewand in Steckzuordnungsrichtung überragenden Vorsprünge weisen auch die Durchtrittsöffnungen für Halteschrauben 70 zur Befestigung der Gehäusewand 69 auf.

Zum Lösen des Adapters 64 braucht lediglich die Verriegelungshülse 71 entgegen der Kraft einer sie in Richtung der Schließstellung belastenden Schraubengangdruckfeder 72 entgegen der Richtung des Pfeiles x verlagert zu werden. Die Sperrkugeln 64 weichen dabei in einen radialen Freiraum 73 aus.

Es sind drei Riegel 35 in winkelgleicher Anordnung vorgesehen.

## Patentansprüche

1. Durch Handhabenbetätigung auf Mediumdurchfluß schaltbare Schnellverschlußkupplung, deren Ventilverschlußorgan (13) ausschließlich in Kupplungsstellung beider Kupplungshälften (I, II) in die Öffnungsstellung (Fig. 3) verlagerbar ist, wozu die eine, einen Pistolengriff (4) tragende Kupplungshälfte (I) einen Hebel aufweist, der das Ventilverschlußorgan (13) in die Öffnungsstellung zur zugehörigen Ventilsitzfläche (11) verlagert, ferner ein zentrales, das Ventilverschlußorgan (13) tragendes und sich in den Pistolengriff (4) fortsetzendes Kernstück (6) besitzt, welches relativ zu einem es aufnehmenden Außengehäuse (9) dieser einen Kupplungshälfte (I) anschlagbegrenzt verschieblich ist, welche Verschiebebewegung des Kernstückes (6) erst freigegeben wird, wenn das Kernstück (6) mit der anderen Kupplungshälfte (II) verrastende Verriegelungsmittel mit dieser in Eingriff stehen, dadurch gekennzeichnet, daß der Hebel als Abzughahn (2) des Pistolengriffs (4) ausgebildet ist, die Verlagerung des Kernstückes (6) entgegen der Kraft einer die Ventilsitzfläche (11) des Ventilverschlußorgans (13) bildenden Außenhülse (24) im Sinne der Sperrung belastenden Druckfeder (22) erfolgt und das Außengehäuse (9) eine auf ihm begrenzt verschieblich gelagerte, in Richtung der anderen Kupplungshälfte (II) federbelastete Verriegelungshülse (V) trägt, welche in ihrer zurückgezogenen Freigabestellung (Fig. 1) gegen Vortritt in die Verriegelungsstellung durch einen von der anderen Kupplungshäfte (II) auslösbaren Riegel (35) blockiert ist, und daß das Außengehäuse (9) ein radial auswärts abgefedertes Sperrglied (27) trägt, welches von einer Innenstufe (28) der Verriegelungshülse (V) in deren zurückgezogener Freigabestellung in Sperreingriff zum Kernstück (6) und in vorverlagerter Stellung der Verriegelungshülse in einen Ausweichraum (62) derselben tritt unter Austritt aus dem Kernstück (6).

2. Schnellverschlußkupplung nach einem oder mehreren der vorhergehenden Ansprüche, dadurch gekennzeichnet, daß der Abzughahn (2) an rückwärtigen, in den Bereich einen Schutzbügels (3) des Pistolengriffs (4) weisenden Laschen (31) des Außengehäuses (9) lagert und sich mit einem gegabelten, gegenüber dem Bedienungsarm (2') des Abzughahns (2) kürzeren Betätigungsarm (33) auf rückwärtigen Schultern (34) des Kernstücks (6) abstützt.

3. Schnellverschlußkupplung nach einem oder mehreren der vorhergehenden Ansprüche, dadurch gekennzeichnet, daß die Verriegelungshülse (V) durch Zapfen/Schlitz-Eingriff (49/50) zum Außengehäuse (9) drehfest gehalten und anschlagbegrenzt ist.

4. Schnellverschlußkupplung nach einem oder mehreren der vorhergehenden Ansprüche, dadurch gekennzeichnet, daß die Ventilsitzfläche (11) bildende, abgefederte Hülse (10) mit einer Ringstufe (St) in Anschlagstellung zur anderen, eingesteckten Kupplungshälfte (II) tritt.

## Claims

1. Quick-locking coupling which can be switched to the flow of medium by manual actuation, the valve locking element (13) of which can be shifted into the opened position (Fig. 3) solely in the coupled position of both coupling halves (I, II), for which purpose one coupling half (I), carrying a pistol grip (4), has a lever which shifts the valve locking element (13) into the opened position relative to the associated valve seat surface (11), and, moreover, has a central core piece (6) which carries the valve locking element (13), continues into the pistol grip (4) and, to an extent limited by a stop, is displaceable relative to an outer housing (9) of this one coupling half (I), which outer housing (9) accommodates the core piece (6), which displacement movement of the core piece (6) is initiated only when interlocking means which interlock the core piece (6) together with the other coupling half (II) are engaged with the latter, characterized in that the lever is designed as a trigger cock (2) of the pistol grip (4), the core piece (6) is shifted against the force of a compression spring (22) which, for the purpose of blocking, loads the outer sleeve (24) forming the valve seat surface (11) of the valve locking element (13), and the outer housing (9) carries an interlocking sleeve (V) which is displaceably mounted on it to a limited extent, is spring-loaded in the direction of the other coupling half (II) and, in its retracted release position (Fig. 1), is prevented from advancing into the interlocking position by a latch (35) which can be released by the other coupling half (II), and that the outer housing (9) carries a blocking member (27) which is spring-mounted radially outwards and which, from an inner step (28) of the interlocking sleeve (V), in the retracted release position of the latter, moves into blocking engagement with the core piece (6) and, in the advanced position of the interlocking sleeve, moves into a deflection space (62) of the latter while moving out of the core piece (6).

2. Quick-locking coupling according to one or more of the preceding claims, characterized in that the trigger cock (2) is mounted on rear brackets (31) of the outer housing (9) which point into the area of a trigger guard (3) of the pistol grip (4) and is supported on rear shoulders (34) of the core piece (6) by a forked actuating arm (33) which is shorter compared with the operating arm (2') of the trigger cock (2).

3. Quick-locking coupling according to one or more of the preceding claims, characterized in that the interlocking sleeve (V) is held non-rotationally relative to the outer housing (9) by pin/slot engagement (49/50) and is limited by a stop.

4. Quick-locking coupling according to one or more of the preceding claims, characterized in that the spring-mounted sleeve (10) forming the valve seat surface (11), with an annular step (St), moves into the stop position relative to the other, inserted coupling half (II).

## Revendications

1. Raccord à fermeture rapide susceptible d'être actionné manuellement pour être amené en position d'ouverture (passage d'un fluide), dont l'obturateur (13) de valve ne peut être amené vers sa position d'ouverture (figure 3) que lorsque les deux demi-accouplements (I, II) se trouvent en position d'accouplement, et dans lequel, à cet effet, l'un des demi-accouplements (I) qui est pourvu d'une poignée de pistolet (4) comporte un levier qui pousse l'obturateur de valve (13) vers la position d'ouverture, en direction de la surface de siège de valve (11) associée, ainsi qu'un noyau (6) central portant l'obturateur de valve (13) et s'étendant jusque dans la poignée de pistolet (4), tout en étant mobile jusqu'à une position de butée selon une course, par rapport à un carter extérieur (9) qui renferme ledit noyau et qui est associé à un demi-accouplement (I), ce noyau (6) n'étant mobile que lorsque des moyens de verrouillage immobilisant le noyau (6) par rapport à l'autre demi-accouplement (II) sont en position d'engagement avec ce dernier, caractérisé en ce que ledit levier présente la forme d'un levier de détente (2) associé à la poignée de pistolet (4), en ce que le déplacement du noyau (6) est effectué à l'encontre d'une force antagoniste fournie par un ressort de compression (22) agissant dans le sens du verrouillage sur une douille extérieure (24) définissant la surface de siège de valve (11) l'obturateur de valve (13), cependant que le carter extérieur (9) porte une douille de verrouillage (V) sollicitée élastiquement en direction de l'autre demi-accouplement (II) et mobile de façon glissante sur ledit carter extérieur selon une course limitée, ladite douille de verrouillage étant, dans sa position rétractée de libération (figure 1), empêchée de se déplacer vers sa position de verrouillage par un verrou (35) susceptible d'être libéré par l'autre demi-accouplement (II), et en ce que le carter extérieur (9) porte un organe de verrouillage (27) sollicité élastiquement radialement vers l'extérieur et qui, dans sa position rétractée de libération passe d'un épaulement intérieur (28) de la douille de verrouillage (V) vers une position de verrouillage par rapport au noyau (6), tandis que, dans la position avancée de la douille de verrouillage, ledit organe de verrouillage pénètre dans un évidement d'effacement (62) de ladite douille de verrouillage en quittant ledit noyau (6).

2. Raccord à fermeture rapide selon une ou plusieurs des revendications précédentes, caractérisé en ce que le levier de détente (2) est monté sur des pattes arrière (31) du carter extérieur (9) qui sont dirigées vers la zone d'un pontet (3) de la poignée de pistolet (4), ledit levier de détente prenant appui sur des épaulements arrière (34) du noyau (6) par un bras d'actionnement (33) fourchu qui est plus court que le bras d'actionnement (2') du levier de détente (2).

3. Raccord à fermeture rapide selon une ou plusieurs des revendications précédentes, caractérisé en ce que la douille de verrouillage (V) est immobilisée en rotation et limitée dans ses déplacements par rapport audit carter extérieur (9) à l'aide d'un engagement à taquet et fente (49, 50).

4. Raccord à fermeture rapide selon une ou plusieurs des revendications précédentes, caractérisé en ce que la douille (10) sollicitée élastiquement et formant la surface de siège de valve (11) vient en position de butée par rapport à l'autre demi-accouplement enfiché (II), par l'intermédiaire d'un épaulement annulaire (St).

FIG. 1

FIG. 2

FIG. 3

# FIG. 4

FIG.5

FIG. 7

II
51
69
St
68
7
7'
68
51"
52

FIG. 6

II 51 70 69
68 67
64 71
66
59 58 7" 7
57
56
54
51' 19 73 60 65 72 7'
51"
55
52
53

0 122 404

FIG. 8

67

64
71
65

67

67

67

FIG. 9

64
71